# EUROPEAN PATENT SPECIFICATION

(11) **EP 2 335 400 B1**
(45) Date of publication and mention of the grant of the patent: **18.07.2018**
(21) Application number: 09785827.8
(22) Date of filing: 04.03.2009
(51) Int. Cl.: H04M 1/725, H04N 7/14, G09B 21/00, G10L 15/24

(54) **SYSTEM AND METHOD FOR VIDEO TELEPHONY BY CONVERTING FACIAL MOTION TO TEXT**
SYSTEM UND VERFAHREN FÜR VIDEOTELEFONIE BEI DEM GESICHTSBEWEGUNG IN TEXT UMGEWANDELT WIRD
SYSTÈME ET PROCÉDÉ DE VISIOPHONIE PAR CONVERSION DE MOUVEMENT DU VISAGE EN TEXTE

(30) Priority: 26.09.2008 US 238557
(43) Date of publication of application: 22.06.2011
(73) Proprietor: Sony Mobile Communications AB, 221 88 Lund (SE)
(72) Inventor: ISAAC, Maycel, 226 43 Lund (SE)
(74) Representative: Aera A/S
(86) International application number: PCT/IB2009/000422
(87) International publication number: WO 2010/035078

(56) References cited:
- JP-A- 2004 015 250
- US-A- 5 806 036
- US-A1- 2003 018 475
- US-A1- 2004 117 191
- US-A1- 2004 186 718
- US-A1- 2006 204 033
- US-A1- 2007 115 343
- US-A1- 2007 188 597

## Description

### TECHNICAL FIELD OF THE INVENTION

The present invention relates to portable electronic devices having a telephone calling capability, and more particularly to a system and methods for video telephony by analyzing facial motions (motions of the eyes, ears, face, nose, etc) to generate communication text.

### DESCRIPTION OF THE RELATED ART

Portable electronic devices, such as mobile telephones, media players, personal digital assistants (PDAs), and others, are ever increasing in popularity. To avoid having to carry multiple devices, portable electronic devices are now being configured to provide a wide variety of functions. For example, a mobile telephone may no longer be used simply to make and receive telephone calls. A mobile telephone may also be a camera (still and/or video), an Internet browser for accessing news and information, an audiovisual media player, a messaging device (text, audio, and/or visual messages), a gaming device, a personal organizer, and have other functions as well.

In this vein, advancements have been made in the video capabilities of portable electronic devices. For example, video capability advances for portable electronic devices include enhanced image generating and analysis features, whether for still photography or video images. Such enhanced features may include face detection capabilities, which may detect the presence of desirable facial features, such as smiles or open eyes, to be photographed or videoed.

Another image enhancement is video telephony. For example, a mobile telephone may have a video telephony capability that permits video calling between users. Such mobile telephones may include a camera lens that faces the user when the user makes a call. A user at the other end of the call may receive a video transmission of the image of the caller, and vice versa providing both user devices have the video telephony capability. Video telephony has an advantage over standard telephony in that users can see each other during a call, which adds to the emotional enjoyment of a call.

Telephone calling devices, however, typically have been of limited use for those with hearing deficiencies or disabilities. For users with a diminished, but still viable hearing capability, volume adjustments may provide some usage improvement. Video telephony also may provide some improvement in that a user can see the face of the other call participant, as well as hear the other participant. Typically, however, to employ video telephony, a user must hold the device well in front of himself or herself, and operate the device in a "speaker telephone" mode. If the volume is commensurately increased to provide for improved hearing, there may be added disturbances to those nearby. Indeed, there may be situations in which any speaker telephone usage may generate disturbances, regardless of the volume. In addition, for users with more pronounced or a total hearing deficiency, even video telephony may be insufficient for supporting a meaningful telephone conversation.

JP 2004015250 describes a mobile phone which analyzes an image and converts the image into text information without any need for the user to perform complicated key operations.

US 2006/0204033 describes a device and method for lip reading. Images of the lips of the user are stored as series of static frame pictures. Each frame is compared to a database that links certain discrete lip shapes or picture patterns to individual letter or syllable sounds. The letters and sounds arc then pieced together to generate text.

US 2007/188597 A1 discloses using facial recognition to identify a participant in a video conference. Once a participant is identified, information about the speaker also may be displayed as part of the video conference.

US 2003/018475 A1 discloses an image analysis which is performed as an aid to generating speech text, Facial images are utilized to enhance a determination of a probability that a user is speaking, so as not to confuse background noise with intended communicative speech. In this regard, the device performs face detection and associated "frontal pose" detection to determine if a user is facing a communication device. Once the frontal pose is detected, a visual speech feature extractor detects facial movements that may be associated with forming speech (e.g., mouth shape, lip movements, etc.). From such analysis, probability determinations are made that audio detected by the system constitutes user speech as opposed to extraneous sounds. The actual speech text is generated based on audio detection of speech. The visual analysis provides enhanced confidence that the audio from which the speech text is generated is actually user speech.

To date, therefore, video telephony and image generating/analysis technology have not been used to their utmost potential, and in particular have not been employed to improve telephone calling in portable electronic devices to the fullest extent.

### SUMMARY

Accordingly, there is a need in the art for an improved system and methods for enhanced telephone calling in a portable electronic device. In particular, there is a need in the art for an improved system and methods for video telephony that provide enhanced video telephony suitable for users with hearing deficiencies, or in situations in which audible or speaker telephone calling may be difficult or inappropriate.

The invention is directed to the electronic devices of claims 1 and 3 and to the method of claim 6. Advantageous embodiments are found in the dependent claims. Therefore, a video telephony system includes a first electronic device having communications circuitry to establish a communication with a second electronic device. The second electronic device may include an image generating device for generating a sequence of images of a user of the second electronic device. The first electronic device may receive the sequence of images of the user of the second electronic device as part of the communication. Based on the sequence of images, a lip reading module within the first electronic device may analyze changes in the second user's facial features to generate text corresponding to communications of the second user. The text is then displayed on a display of the first electronic device so that the first user may follow along with the conversation in a text format without the need to employ an audible or speaker telephone function. The sequence of images may be displayed along with the text to provide enhanced video telephony.

In another embodiment, a lip reading module may be contained within the second electronic device. Based on the sequence of images, the lip reading module in the second electronic device may analyze the changes in the second user's facial features to generate text corresponding to communicated speech of the second user. The text may then be transmitted from the second electronic device to the first electronic device for display on the first electronic device, as described above.

Therefore, according to an aspect of the invention, a first electronic device for a first user comprises communications circuitry for establishing a communication with another electronic device of a second user. A conversion module receives a sequence of images of the second user communicating as part of the communication, and analyzes the sequence of images to generate text corresponding to a communication portion of the second user. A display is provided for displaying the text to the first user.

According to an embodiment of the first electronic device, the conversion module comprises a lip reading module and the sequence of images is a sequence of images of the second user's facial features, wherein the lip reading module analyzes the sequence of images of the second user's facial features to generate the text.

According to an embodiment of the first electronic device, the lip reading module detects at least one of an orientation of a facial feature, velocity of movement of a facial feature, or optical flow changes over consecutive images of the sequence of images to analyze the sequence of images to generate the text.

According to an embodiment of the first electronic device, the display displays the text in real time during the communication.

According to an embodiment of the first electronic device, the display displays the sequence of images along with the text.

According to an embodiment of the first electronic device, the electronic device is a mobile telephone.

According to another aspect of the invention, a second electronic device for a first user comprisescommunications circuitry for establishing a communication with another electronic device of a second user. A user image generating device generates a sequence of images of the first user communicating as part of the communication, and a conversion module analyzes the sequence of images of the first user to generate text corresponding to a communication portion of the first user. As part of the communication, the communication circuitry transmits the text to the electronic device of the second user for display on the another electronic device.

According to an embodiment of the second electronic device, the conversion module comprises a lip reading module and the sequence of images is a sequence of motion of the first user's facial features, wherein the lip reading module analyzes the motion of the first user's facial features to generate the text.

According to an embodiment of the second electronic device, the lip reading module detects at least one of an orientation of a facial feature, velocity of movement of a facial feature, or optical flow changes over consecutive images of the sequence of images to analyze the sequence of images to generate the text.

According to an embodiment of the second electronic device, the communications circuitry transmits the text in real time as part of the communication.

According to an embodiment of the second electronic device, the user image generating device comprises a camera assembly having a lens that faces the first user during the communication.

According to an embodiment of the second electronic device, the electronic device is a mobile telephone.

According to another aspect of the invention, a method of video telephony comprises the steps of establishing a communication, receiving a sequence of images of a participant communicating in the communication, analyzing the sequence of images and generating text corresponding to a communication portion of the participant, and displaying the text on a display on an electronic device.

According to an embodiment of the method, the sequence of images is a sequence of images of the participant's facial features, and the analyzing step comprises analyzing the sequence of images of the participant's facial features to generate the text.

According to an embodiment of the method, the analyzing step further comprises detecting at least one of an orientation of a facial feature, velocity of movement of a facial feature, or optical flow changes over consecutive images of the sequence of images to analyze the sequence of images to generate the text.

According to an embodiment of the method, the analyzing step further comprises lip reading to analyze the sequence of images to generate the text.

According to an embodiment of the method, the text is displayed in real time during the communication.

According to an embodiment of the method, the method further comprises displaying the sequence of images along with the text.

According to an embodiment of the method, the method further comprises generating the sequence of images in a first electronic device, transmitting the sequence of images to a second electronic device as part of the communication, analyzing the sequence of images within the second electronic device to generate text corresponding to the communication portion of the participant, and displaying the text on a display on the second electronic device.

According to an embodiment of the method, the method further comprises generating the sequence of images in a first electronic device, analyzing the sequence of images within the first electronic device to generate text corresponding to the communication portion of the participant, transmitting the text to a second electronic device as part of the communication, and displaying the text on a display on the second electronic device.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the claims appended hereto.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

FIG. 1 depicts a schematic diagram of a manner by which an exemplary first electronic device and an exemplary second electronic device may participate in a video telephone call.
FIG. 2 is a schematic view of a mobile telephone as an exemplary electronic device for use in connection with a video telephone call.
FIG. 3 is a schematic block diagram of operative portions of the mobile telephone of FIG. 2.
FIG. 4 is a schematic diagram of a communications system in which the mobile telephone of FIG. 2 may operate.
FIGs. 5A-5C are schematic diagrams depicting a first exemplary manner of executing a video telephone call.
FIG. 6 represents an exemplary sequence of images that may represent changes in the configuration of a user's facial features as may occur during mouthing speech.
FIG. 7 is a flow chart depicting an exemplary method of executing a video telephone call.
FIGs. 8A-8C are schematic diagrams depicting a second exemplary manner of executing a video telephone call.

### DETAILED DESCRIPTION OF EMBODIMENTS

Embodiments of the present invention will now be described with reference to the drawings, wherein like reference numerals are used to refer to like elements throughout. It will be understood that the figures are not necessarily to scale.

The following description is made in the context of a conventional mobile telephone. It will be appreciated that the invention is not intended to be limited to the context of a mobile telephone and may relate to any type of appropriate electronic device with a telephone calling function. Such devices may include any portable radio communication equipment or mobile radio terminal, including mobile telephones, pagers, communicators, electronic organizers, personal digital assistants (PDAs), smartphones, and any communication apparatus or the like.

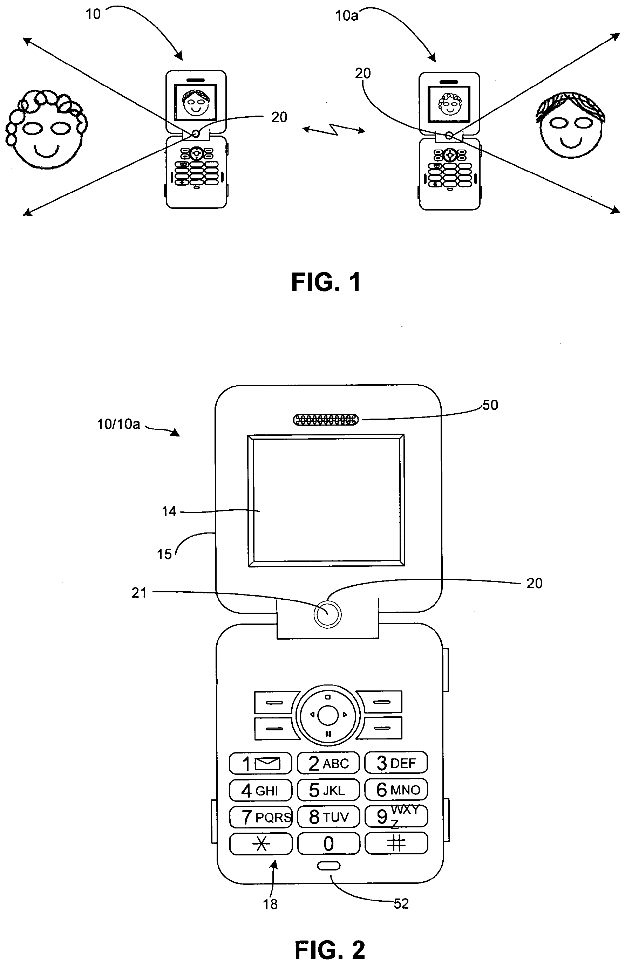

Referring to FIG. 1, exemplary mobile telephones 10/10a may be used as exemplary electronic devices in the present invention. FIG. 1 depicts generally how a first mobile telephone 10 may participate in a video telephone call with a second mobile telephone 10a, and vice versa. Mobile telephone 10 may have a video telephony function by which a camera assembly 20 generates an image of a first user communicating during a telephone call, as indicated by the straight arrows in the figure. A moving image of the user of mobile telephone 10 communicating may be transmitted during the call and reproduced in real time on a display of the called mobile telephone 10a. Similarly, in this example the called mobile telephone 10a also may have a video telephony function by which a camera assembly 20 generates an image of the called user communicating during the telephone call, as indicated by the straight arrows in the figure. A moving image of the user of mobile telephone 10a communicating may be transmitted during the call and reproduced in real time on a display of the calling mobile telephone 10. It will be appreciated that it does not matter which mobile telephone represents the called versus the calling device, and thus mobile telephone 10a may be the calling device and mobile telephone 10 may be the called device. Furthermore, both mobile telephones need not have full video telephony functionality. For example, if only mobile telephone 10 has a camera assembly 20, then only the user of mobile telephone 10a would perceive a video component of the call, and vice versa.

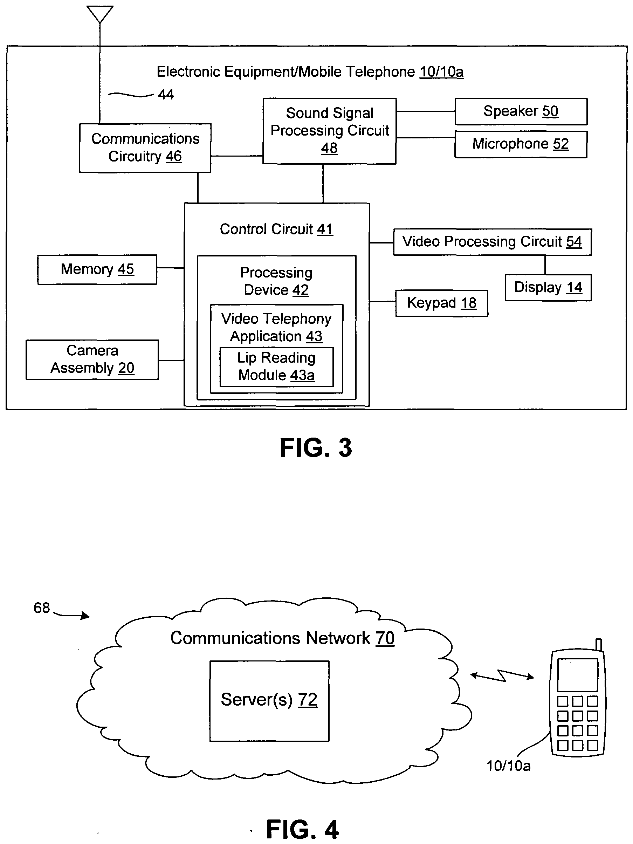

FIG. 2 depicts various external components of an exemplary mobile telephone 10 (or 10a) in more detail, and FIG. 3 represents a functional block diagram of operative portions of the mobile telephone 10 (or 10a). The mobile telephone may be a clamshell phone with a flip-open cover 15 movable between an open and a closed position. In FIG. 2, the cover is shown in the open position. It will be appreciated that mobile telephone 10/10a may have other configurations, such as a "block" or "brick" configuration.

Mobile telephone 10/10a may include a primary control circuit 41 that is configured to carry out overall control of the functions and operations of the mobile telephone. The control circuit 41 may include a processing device 42, such as a CPU, microcontroller or microprocessor. Among their functions, to implement the features of the present invention, the control circuit 41 and/or processing device 42 may comprise a controller that may execute program code embodied as the video telephony application 43. It will be apparent to a person having ordinary skill in the art of computer programming, and specifically in application programming for cameras, mobile telephones or other electronic devices, how to program a mobile telephone to operate and carry out logical functions associated with application 43. Accordingly, details as to specific programming code have been left out for the sake of brevity. Also, while the code may be executed by control circuit 41 in accordance with an exemplary embodiment, such controller functionality could also be carried out via dedicated hardware, firmware, software, or combinations thereof, without departing from the scope of the invention.

Mobile telephone 10/10a also may include a camera assembly 20. The camera assembly 20 constitutes a user image generating device for generating a sequence of images of a user of the mobile telephone 10/10a. As shown in FIG. 2, camera assembly 20 may include an inward facing lens 21 that faces toward the user when the clamshell is in the open position. In this manner, camera assembly 20 may provide a video telephony function that generates a sequence of images of a user communicating while the user is participating in a telephone call. As further described below, the generated images of the user communicating may be employed for face detection, and particularly for a lip reading function, in accordance with embodiments of the present invention. It will be appreciated that camera assembly 20 also may include and outward facing lens (not shown) for taking still photographs or moving video images of subject matter opposite the user. In an alternative embodiment, the ordinary photography and video functions may be provided by a second camera assembly distinct or apart from the video telephony camera assembly 20.

Mobile telephone 10/10a has a display 14 viewable when the clamshell telephone is in the open position. The display 14 displays information to a user regarding the various features and operating state of the mobile telephone, and displays visual content received by the mobile telephone and/or retrieved from a memory 45. Display 14 may be used to display pictures, video, and the video portion of multimedia content. For ordinary photograph or video functions, the display 14 may be used as an electronic viewfinder for the camera assembly 20. The display 14 may be coupled to the control circuit 41 by a video processing circuit 54 that converts video data to a video signal used to drive the various displays. The video processing circuit 54 may include any appropriate buffers, decoders, video data processors and so forth. The video data may be generated by the control circuit 41, retrieved from a video file that is stored in the memory 45, derived from an incoming video data stream or obtained by any other suitable method. In accordance with embodiments of the present invention, as part of the video telephony function, display 14 also may display the other participant during a video telephone call.

Mobile telephone 10/10a also may include a keypad 18 that provides for a variety of user input operations. For example, keypad 18 typically includes alphanumeric keys for allowing entry of alphanumeric information such as telephone numbers, phone lists, contact information, notes, etc. In addition, keypad 18 typically includes special function keys such as a "send" key for initiating or answering a call, and others. Some or all of the keys may be used in conjunction with the display as soft keys. Keys or key-like functionality also may be embodied as a touch screen associated with the display 14.

The mobile telephone 10/10a includes communications circuitry 46 that enables the mobile telephone to establish a communication by exchanging signals with a called/calling device, typically another mobile telephone or landline telephone, or another electronic device. The communication may be any type of communication, which would include a telephone call (including a video telephone call). The mobile telephone 10/10a also may be configured to transmit, receive, and/or process data such as text messages (e.g., colloquially referred to by some as "an SMS," which stands for short message service), electronic mail messages, multimedia messages (e.g., colloquially referred to by some as "an MMS," which stands for multimedia message service), image files, video files, audio files, ring tones, streaming audio, streaming video, data feeds (including podcasts) and so forth. Processing such data may include storing the data in the memory 45, executing applications to allow user interaction with data, displaying video and/or image content associated with the data, outputting audio sounds associated with the data and so forth.

The mobile telephone 10/10a may include an antenna 44 coupled to the communications circuitry 46. The communications circuitry 46 may include a radio circuit having a radio frequency transmitter and receiver for transmitting and receiving signals via the antenna 44 as is conventional. The mobile telephone 10/10a further includes a sound signal processing circuit 48 for processing audio signals transmitted by and received from the communications circuitry 46. Coupled to the sound processing circuit 48 are a speaker 50 and microphone 52 that enable a user to listen and speak via the mobile telephone as is conventional.

Referring to FIG. 4, the mobile telephone 10/10a may be configured to operate as part of a communications system 68. The system 68 may include a communications network 70 having a server 72 (or servers) for managing calls placed by and destined to the mobile telephone 10/10a, transmitting data to the mobile telephone 10/10a and carrying out any other support functions. The server 72 communicates with the mobile telephone via a transmission medium. The transmission medium may be any appropriate device or assembly, including, for example, a communications tower (e.g., a cell tower), another mobile telephone, a wireless access point, a satellite, etc. Portions of the network may include wireless transmission pathways. The network 70 may support the communications activity of multiple mobile telephones and other types of end user devices. As will be appreciated, the server 72 may be configured as a typical computer system used to carry out server functions and may include a processor configured to execute software containing logical instructions that embody the functions of the server 72 and a memory to store such software.

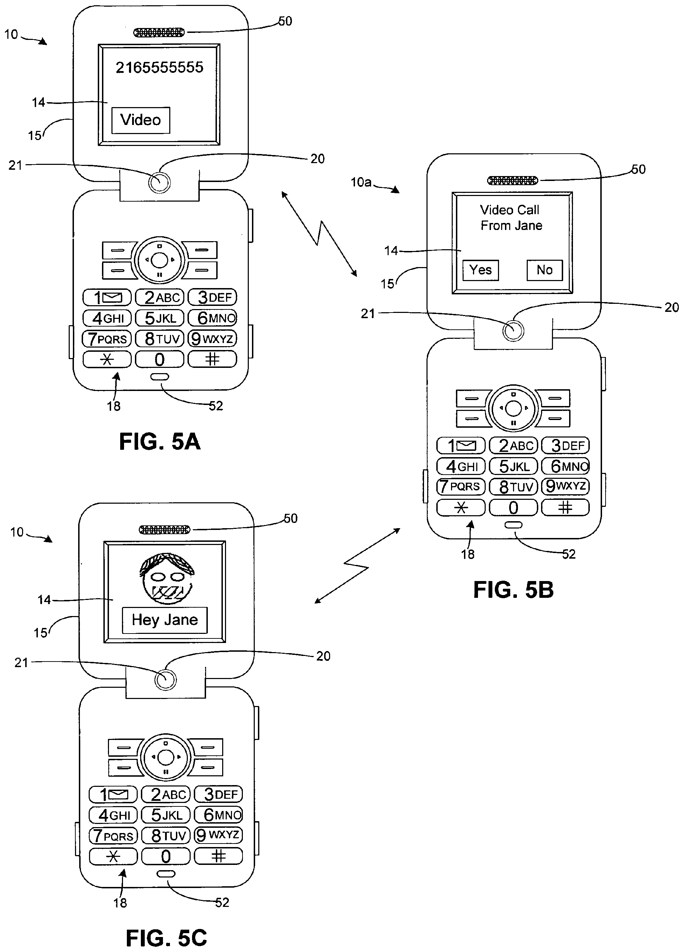

FIGs. 5A-5C depict an exemplary manner of executing a video telephone call. In this example, a first user Jane initiates the call with a calling mobile telephone 10, and a second user John receives the telephone call with a called mobile telephone 10a. It is also presumed that Jane does not wish to rely on audible speaker telephone capabilities. For example, Jane may have a hearing deficiency that may render solely audio calls difficult, or she may be in a situation in which the use of a speaker telephone function may be overly disturbing to others or is otherwise inappropriate.

FIG. 5A depicts an exemplary display of Jane's mobile telephone 10 as she initiates the call. For example, Jane may enter a telephone number using the keypad 18, by selection from a menu of contacts, or by any other conventional means. In this example, a selection for "Video" is displayed for initiating a video call, which may also be selected by any conventional means. For example, a video call may be selected from a menu, by pressing a dedicated key, directly from the display as a touch screen input, etc. FIG. 5B depicts an exemplary display of John's mobile telephone 10a in response to the initiating of the call. For example, mobile telephone 10a may display the identity of the caller (Jane), and that a video call has been requested. An option to accept or decline the video call ("Yes" or "No"), likewise selectable by any conventional means, may be provided. It will be appreciated that the precise display and graphical user interface (GUI) depicted in the figures represent an example, and the format, configuration, and content may be varied.

The jagged arrow linking FIGs. 5B and 5C indicates that John has accepted the video call and that a video call has been established. As described above with reference to FIG. 1, a camera assembly of 20 on mobile telephone 10a may generate a moving video image of John communicating as a sequence of images, and transmit such sequence of images to Jane's mobile telephone 10 as part of the call. An image of John may now be displayed in real time on mobile telephone 10 as part of the communication. Optionally, although not shown in this particular figure, a sequence of images of Jane may similarly be transmitted to the mobile telephone 10a of John. It is not necessary, however, that video be transmitted in both calling directions. As is further described below, Jane, as the hearing impaired participant (or the participant who otherwise does not want to use the speaker telephone capability), may view the sequence of images of participant John as generated by the mobile telephone 10a.

In particular, as seen in FIG. 5C, the image of John is displayed along with an exemplary text "Hey Jane." The text represents an exemplary item or communication portion associated with John. In other words, John has spoken the words "Hey Jane" as a portion of the communication, and this speech item is displayed substantially simultaneously or in real time with John's image as he speaks during the communication. In this manner, Jane may read along with John's portion of the conversation, and Jane, therefore, does not have to employ any of the speaker features of the mobile telephone 10. It will be appreciated that as used herein, the term "text" may include any readable or viewable character or set of characters, including letters, syllables, whole words and phrases, digits and numbers, symbols, and the like.

In FIG. 5C, for explanatory purposes the image of John is highlighted with a box and slash marks. In actuality, such highlighting may not be displayed to the user, but is indicated in FIG. 5C to indicate the functioning of a conversion module that receives the sequence of images of a user (John) communicating, and analyzes the sequence of images to generate text corresponding to a communication portion (speech) of the user. Specifically, referring again to FIG. 3, the video telephony application 43 may include a conversion module in the form of a lip reading module 43a. As further described in more detail below, the lip reading module 43a may employ face detection techniques to analyze the visual configuration and movement of a speaker's facial features, such as the mouth and lips, and generate text corresponding to the communication portion.

For example, Jane is a first user of the first mobile telephone 10 who has transmitted a video call request to a second user John of the second mobile telephone 10a. In FIG. 5B, if the user of the second mobile telephone 10a (John) accepts the video call, the video telephony application is activated. The camera assembly 20 of mobile telephone 10a may begin to generate John's image via the lens 21 as a sequence of images. In one embodiment, the sequence of images may be transmitted to the first mobile telephone 10.

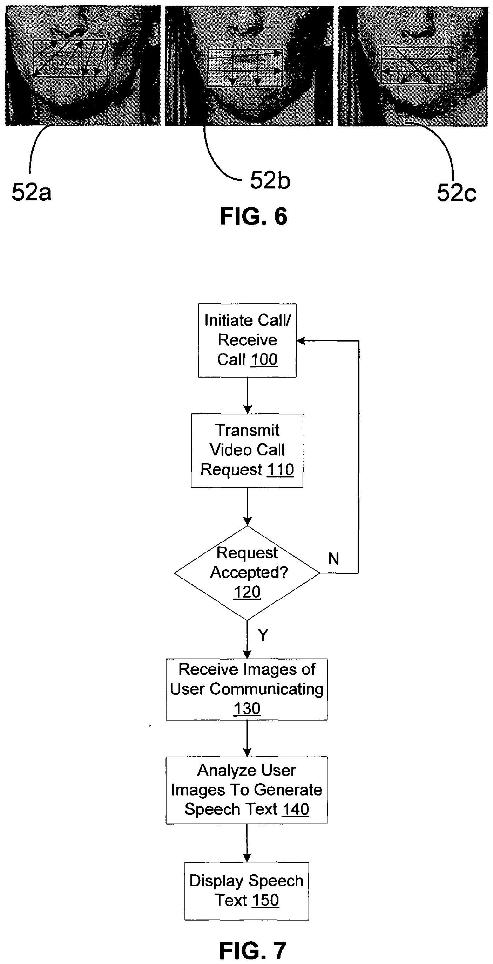

As part of the video telephony application 43 of the first mobile telephone 10, the sequence of images may be passed to the conversion module or lip reading module 43a, which interprets the motion and configuration of the sequence of images as communicated speech text. The motion and configuration detection may be interpreted by means of object recognition, edge detection, silhouette recognition, velocity determinations, or other means for detecting motion as are known in the art. For example, FIG. 6 represents a sequence of images 52a-c that may represent changes in the configuration of a user's lips and mouth as may occur during mouthing speech. As indicated by the arrows in the figure, a change in the position, configuration, and movement of the mouth and lips represent both a change in orientation and a change in velocity of these facial features. There may also be changes in the optical flow in that subtle differences in shadowing and light balance, caused by the changes in feature orientation, may result in gray value changes over consecutive images in the sequence. The changes in feature orientation, feature velocity, and/or optical flow may be analyzed by the lip reading module 43a for the generation of speech text corresponding to communicated speech of the second user (John). The text may then be outputted for rendering on the display 14 of the first mobile telephone (Jane's telephone) 10.

In the above example, images of the second user of mobile telephone 10a are transmitted to the first mobile telephone 10, and mobile telephone 10 (via the video telephony application 43 and lip reading module 43a) analyzes the images to generate the communication portions or speech text. In an alternative embodiment, the second mobile telephone 10a has the lip reading module 43a. In this embodiment, the lip reading and text generation are performed in the second mobile telephone 10a. The generated text may then be transmitted from the mobile telephone 10a to the first mobile telephone 10 for display. In addition, although it is preferred that mobile telephone 10 displays both the sequence of images and the associated text, the text may alternatively be displayed in real time by itself and without the user images. In another embodiment, both mobile telephones have a user-facing camera assembly 20 and lip reading module 43a. In this manner, the call is fully text enhanced, in that the mouthed speech of each user will be converted to text for display on the other's device, and vice versa.

In accordance with the above, FIG. 7 is a flow chart depicting an exemplary method of executing a video telephone call. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention.

The method may begin at step 100, in which a user may initiate a telephone call. For example, a first mobile telephone 10 may initiate a telephone call with a second mobile telephone 10a. At step 110, the first mobile telephone 10 may transmit a video call request to the second mobile telephone 10a. At step 120, a determination may be made as to whether the video call request has been accepted. If the request is denied, the method essentially ends until a subsequent telephone call. If the video call request is accepted, the method may proceed to step 130 at which a sequence of images of a call participant communicating, such as the user of mobile telephone 10a, may be received. At step 140, the user images may be analyzed for the generation of speech text corresponding to a communication portion or speech of the second user.

As described above, the receiving and text generation steps 130 and 140 may proceed in a variety of ways. For example, the user images may be received by the generating of the images by the second mobile telephone 10a. The sequence of images may then be transmitted to the mobile telephone 10 and analyzed to generate the speech text. Alternatively, the image generation and text generation steps may both be performed by the second mobile telephone 10a, and the resultant speech text may be transmitted to the mobile telephone 10. In addition, images of both participants communicating may be generated and analyzed to generate speech text in one of the ways described above. Regardless of the manner by which user images are received and analyzed to generate the communication portions or speech text, at step 150 the speech text is displayed on one or both of the mobile telephones.

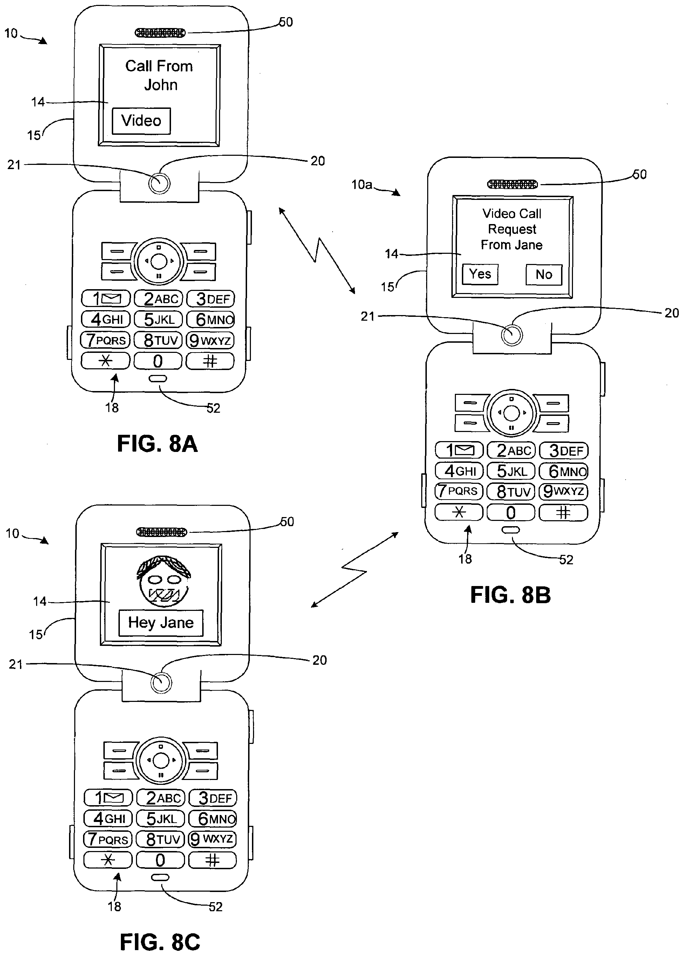

Referring again to step 100 of FIG. 7, note also that it does not matter which user device initiates the call. FIGs. 8A-8C therefore depict a second exemplary manner of executing a video telephone call. FIGs. 8A-8C are comparable to FIGs. 5A-5C except that in the example of FIGs. 8A-8C, the user of the second mobile telephone 10a (John) initiates the call with the first mobile telephone 10 (Jane). As before, it will be appreciated that the precise display and graphical user interface (GUI) depicted in the figures represent an example, and the format, configuration, and content may be varied.

It is once more (similar to the example of FIGs. 5A-5C) presumed that Jane does not wish to rely on audible speaker telephone capabilities. For example, Jane may have a hearing deficiency that may render solely audio calls difficult, or she may be in a situation in which the use of a speaker telephone function may be overly disturbing to others. FIG. 8A depicts an exemplary display of Jane's mobile telephone 10 as she receives a call initiated by John. A text indication "Call From John" may be displayed to inform Jane that a call is being received. Because Jane may have a hearing deficiency, the text display may be accompanied by a non-audible alert. Examples of such alerts may include a vibration indication, blinking lights, or other forms of physical or visual indications of a call (or combinations thereof) as are known in the art.

In this example, a selection for "Video" is displayed on the mobile telephone 10 for requesting that the received call be executed as a video call, which may also be selected by any conventional means. FIG. 8B depicts an exemplary display of John's mobile telephone 10a in response to the request for converting the call into a video call. For example, mobile telephone 10a may display that a video call has been requested. An option to accept or decline the video call ("Yes" or "No"), likewise selectable by any conventional means, may be provided. The jagged arrow linking FIGs. 8B and 8C indicates that John has accepted the video request, and the call may then proceed as a video call.

John's sequence of images may then be generated and his communication portions converted into text in any of the ways described above. As seen in FIG. 8C, for example, the image of John communicating is displayed along with an exemplary text "Hey Jane" as an exemplary communication portion. In other words, John has spoken the words "Hey Jane" as part of the conversation, and this conversation portion is displayed in real time substantially simultaneously with John's image as he speaks. In this manner, regardless of which party initiates a call, Jane may read along with John's portion of the conversation, and Jane, therefore, does not have to employ any of the speaker features of the mobile telephone 10.

Video telephony thus may be employed in a manner that is enhanced for users with a hearing deficiency. The hearing deficiency may be a physical characteristic of a user, or the result of being in a situation in which speaker telephone calling may be difficult or inappropriate. A conversion module may employ face detection, and lip reading in particular, to analyze a user's facial movements and configuration while communicating to generate speech text, thereby obviating the need for the speaker to user audible device capabilities. At the other end of the call, the speech text may be displayed in real time, thereby obviating the need of the receiving participant to employ an audible speaker telephone capability as is conventional for video telephony. In addition, the text enhanced video telephony features may be employed by both users to provide for essentially a silent, video telephone call from the standpoint of both participants.

Although the invention has been shown and described with respect to certain preferred embodiments, it is understood that equivalents and modifications will occur to others skilled in the art upon the reading and understanding of the specification. The present invention is limited only by the scope of the following claims.

## Claims

1. An electronic device (10) for a first user comprising:
communications circuitry (46) for establishing a video communication with another electronic device (10a) of a second user; and
a conversion module (43) for receiving a sequence of images of the second user communicating as part of the video communication, and for analyzing the sequence of images based on a moving change in the orientation and velocity of image features to generate text corresponding to a communication portion of the second user; wherein the electronic device (101) further comprises:
a display (14) for displaying to the first user the text substantially in real time and simultaneously with the sequence of images corresponding to the text of the communication portion of the second user;
wherein the conversion module (43) comprises a lip reading module (43a) and the sequence of images is a sequence of images of the second user's facial features, wherein the lip reading module is configured to analyze the sequence of images of the second user's facial features to generate the text and
wherein the lip reading module (43a) is configured to detect a combination of a moving orientation of a facial feature, velocity of movement of a facial feature, and optical flow changes over consecutive images of the sequence of images to analyze the sequence of images to generate the text.

2. The electronic device (10) of claim 1, wherein the electronic device is a mobile telephone.

3. An electronic device (10a) for a first user comprising:
communications circuitry (46) for establishing a video communication with another electronic device (10) of a second user;
a user image generating device (20) for generating a sequence of images of the first user communicating as part of the video communication; and
a conversion module (43) for analyzing the sequence of images of the first user based on a moving change in the orientation and velocity of image features to generate text corresponding to a communication portion of the first user; wherein as part of the video communication, the communication circuitry is configured to transmit the text corresponding to the text of the communication portion substantially in real time and simultaneously with the sequence of images to the electronic device of the second user for display on the another electronic device;
wherein the conversion module (43) comprises a lip reading module (43a) and the sequence of images is a sequence of motion of the first user's facial features, wherein the lip reading module is configured to analyze the motion of the first user's facial features to generate the text; and
wherein the lip reading module (43a) is configured to detect a combination of a moving orientation of a facial feature, velocity of movement of a facial feature, and optical flow changes over consecutive images of the sequence of images to analyze the sequence of images to generate the text.

4. The electronic device (10a) of claim 3, wherein the user image generating device (20) comprises a camera assembly having a lens (21) that faces the first user during the communication.

5. The electronic device (10a) of any of claims 3-4, wherein the electronic device is a mobile telephone.

6. A method of video telephony comprising the steps of:
establishing a video communication;
receiving a sequence of images of a participant communicating in the video communication; and
analyzing the sequence of images based on a moving change in the orientation and velocity of image features to generate text corresponding to a communication portion of the participant; wherein the method further comprises:
displaying the text on a display (14) on an electronic device (10) substantially in real time and simultaneously with the sequence of images corresponding to the text of the communication portion; and
wherein the sequence of images is a sequence of images of the participant's facial features, and the analyzing step comprises using a lip reading module to analyze the sequence of images of the participant's facial features to generate the text; and
wherein the analyzing step further comprises detecting a combination of a moving orientation of a facial feature, velocity of movement of a facial feature, and optical flow changes over consecutive images of the sequence of images to analyze the sequence of images to generate the text.

7. The method of claim 6, wherein the analyzing step further comprises lip reading to analyze the sequence of images to generate the text.

8. The method of claim any of claims 6-7, further comprising:
generating the sequence of images in a first electronic device (10a);
transmitting the sequence of images to a second electronic device (10) as part of the video communication;
analyzing the sequence of images based on a moving change in the orientation and velocity of image features within the second electronic device to generate text corresponding to the communication portion of the participant; and
displaying the text on a display (14) on the second electronic device substantially in real time and simultaneously with the sequence of images corresponding to the text of the communication portion.

9. The method of any of claims 6-7, further comprising:
generating the sequence of images in a first electronic device (10a);
analyzing the sequence of images based on a moving change in the orientation and velocity of image features within the first electronic device to generate text corresponding to the communication portion of the participant;
transmitting the text to a second electronic device (10) as part of the video communication; and
displaying the text on a display (14) on the second electronic device substantially in real time and simultaneously with the sequence of images corresponding to the text of the communication portion.

## Patentansprüche

1. Elektronische Vorrichtung (10) für einen ersten Benutzer, umfassend:
eine Kommunikationsschaltung (46) zum Aufbauen einer Videokommunikation mit einer anderen elektronischen Vorrichtung (10a) eines zweiten Benutzers; und
ein Umwandungsmodul (43) zum Empfangen einer Sequenz von Bildern des zweiten Benutzers, der als Teil der Videokommunikation kommuniziert, und zum Analysieren der Sequenz von Bildern basierend auf einer sich bewegenden Änderung der Ausrichtung und Geschwindigkeit von Bildmerkmalen, um Text zu generieren, der einem Abschnitt der Kommunikation des zweiten Benutzers entspricht;
wobei die elektronische Vorrichtung (101) weiter umfasst:
einen Bildschirm (14), um dem ersten Benutzer den Text im Wesentlichen in Echtzeit und gleichzeitig mit der Sequenz von Bildern, die dem Text des Abschnitts der Kommunikation des zweiten Benutzers entspricht, anzuzeigen;
wobei das Umwandungsmodul (43) ein Lippenlesemodul (43a) umfasst, und die Sequenz von Bildern eine Sequenz von Bildern der Gesichtsmerkmale des zweiten Benutzers ist, wobei das Lippenlesemodul konfiguriert ist, um die Sequenz von Bildern der Gesichtsmerkmale des zweiten Benutzers zu analysieren, um den Text zu generieren, und
wobei das Lippenlesemodul (43a) konfiguriert ist, um eine Kombination aus einer sich bewegenden Ausrichtung eines Gesichtsmerkmals, Geschwindigkeit der Bewegung eines Gesichtsmerkmals und Änderungen des optischen Flusses über aufeinanderfolgende Bilder der Sequenz von Bildern zu erkennen, um die Sequenz von Bildern zu analysieren, um den Text zu generieren.

2. Elektronische Vorrichtung (10) nach Anspruch 1, wobei die elektronische Vorrichtung ein Mobiltelefon ist.

3. Elektronische Vorrichtung (10a) für einen ersten Benutzer, umfassend:
eine Kommunikationsschaltung (46) zum Aufbauen einer Videokommunikation mit einer anderen elektronischen Vorrichtung (10) eines zweiten Benutzers;
eine Benutzerbilder generierende Vorrichtung (20) zum Generiere einer Sequenz von Bildern des ersten Benutzers, der als Teil der Videokommunikation kommuniziert; und
ein Umwandungsmodul (43) zum Analysieren der Sequenz von Bildern des ersten Benutzers basierend auf einer sich bewegenden Änderung der Ausrichtung und Geschwindigkeit von Bildmerkmalen, um Text zu generieren, der einem Abschnitt der Kommunikation des ersten Benutzers entspricht;
wobei als Teil der Videokommunikation die Kommunikationsschaltung konfiguriert ist, um den Text, der dem Text des Abschnitts der Kommunikation entspricht, im Wesentlichen in Echtzeit und gleichzeitig mit der Sequenz von Bildern an die elektronische Vorrichtung des zweiten Benutzers zum Anzeigen auf der anderen elektronischen Vorrichtung zu übertragen;
wobei das Umwandungsmodul (43) ein Lippenlesemodul (43a) umfasst, und die Sequenz von Bildern eine Sequenz von Bewegung der Gesichtsmerkmale des ersten Benutzers ist, wobei das Lippenlesemodul konfiguriert ist, um die Bewegung der Gesichtsmerkmale des ersten Benutzers zu analysieren, um den Text zu generieren; und
wobei das Lippenlesemodul (43a) konfiguriert ist, um eine Kombination aus einer sich bewegenden Ausrichtung eines Gesichtsmerkmals, Geschwindigkeit der Bewegung eines Gesichtsmerkmals und Änderungen des optischen Flusses über aufeinanderfolgende Bilder der Sequenz von Bildern zu erkennen, um die Sequenz von Bildern zu analysieren, um den Text zu generieren.

4. Elektronische Vorrichtung (10a) nach Anspruch 3, wobei die Benutzerbilder generierende Vorrichtung (20) eine Kamerabaugruppe umfasst, die eine Linse (21) aufweist, die während der Kommunikation dem ersten Benutzer gegenüber liegt.

5. Elektronische Vorrichtung (10a) nach einem der Ansprüche 3 und 4, wobei die elektronische Vorrichtung ein Mobiltelefon ist.

6. Verfahren für Videotelefonie, umfassend die folgenden Schritte:
Aufbauen einer Videokommunikation;
Empfangen einer Sequenz von Bildern eines Teilnehmers, der in der Videokommunikation kommuniziert; und
Analysieren der Sequenz von Bildern basierend auf einer sich bewegenden Änderung der Ausrichtung und Geschwindigkeit von Bildmerkmalen, um Text zu generieren, der einem Abschnitt der Kommunikation des Teilnehmers entspricht;
wobei das Verfahren weiter umfasst:
Anzeigen des Textes auf einem Bildschirm (14) an einer elektronischen Vorrichtung (10) im Wesentlichen in Echtzeit und gleichzeitig mit der Sequenz von Bildern, die dem Text des Abschnitts der Kommunikation entspricht; und
wobei die Sequenz von Bildern eine Sequenz von Bildern der Gesichtsmerkmale des Teilnehmers ist, und der Schritt des Analysierens das Verwenden eines Lippenlesemoduls zum Analysieren der Sequenz von Bildern der Gesichtsmerkmale des Teilnehmers umfasst, um den Text zu generieren; und
wobei der Schritt des Analysierens weiter das Erkennen einer Kombination aus einer sich bewegenden Ausrichtung eines Gesichtsmerkmals, Geschwindigkeit der Bewegung eines Gesichtsmerkmals und Änderungen des optischen Flusses über aufeinanderfolgende Bilder der Sequenz von Bildern umfasst, um die Sequenz von Bildern zu analysieren, um den Text zu generieren.

7. Verfahren nach Anspruch 6, wobei der Schritt des Analysierens weiter das Lippenlesen umfasst, um die Sequenz von Bildern zu analysieren, um den Text zu generieren.

8. Verfahren nach einem der Ansprüche 6 und 7, weiter umfassend:
Generieren der Sequenz von Bildern in einer ersten elektronischen Vorrichtung (10a);
Übertragen der Sequenz von Bildern an eine zweite elektronische Vorrichtung (10) als Teil der Videokommunikation;
Analysieren der Sequenz von Bildern basierend auf einer sich bewegenden Änderung der Ausrichtung und Geschwindigkeit von Bildmerkmalen innerhalb der zweiten elektronischen Vorrichtung, um Text zu generieren, der dem Abschnitt der Kommunikation des Teilnehmers entspricht; und
Anzeigen des Textes auf einem Bildschirm (14) an der zweiten elektronischen Vorrichtung im Wesentlichen in Echtzeit und gleichzeitig mit der Sequenz von Bildern, die dem Text des Abschnitts der Kommunikation entspricht.

9. Verfahren nach einem der Ansprüche 6 und 7, weiter umfassend:
Generieren der Sequenz von Bildern in einer ersten elektronischen Vorrichtung (10a);
Analysieren der Sequenz von Bildern basierend auf einer sich bewegenden Änderung der Ausrichtung und Geschwindigkeit von Bildmerkmalen innerhalb der ersten elektronischen Vorrichtung, um Text zu generieren, der dem Abschnitt der Kommunikation des Teilnehmers entspricht;
Übertragen des Textes an eine zweite elektronische Vorrichtung (10) als Teil der Videokommunikation; und
Anzeigen des Textes auf einem Bildschirm (14) an der zweiten elektronischen Vorrichtung im Wesentlichen in Echtzeit und gleichzeitig mit der Sequenz von Bildern, die dem Text des Abschnitts der Kommunikation entspricht.

## Revendications

1. Dispositif électronique (10) pour un premier utilisateur comprenant :
une circuiterie de communication (46) pour établir une communication vidéo avec un autre dispositif électronique (10a) d'un deuxième utilisateur ; et
un module de conversion (43) pour recevoir une séquence d'images du deuxième utilisateur communiquant comme partie de la communication vidéo, et pour analyser la séquence d'images sur la base d'un changement de mouvement dans l'orientation et la vitesse de caractéristiques d'image pour générer un texte correspondant à une portion de communication du deuxième utilisateur ;
dans lequel le dispositif électronique (101) comprend en outre :
un dispositif d'affichage (14) pour afficher au premier utilisateur le texte sensiblement en temps réel et simultanément à la séquence d'images correspondant au texte de la portion de communication du deuxième utilisateur ;
dans lequel le module de conversion (43) comprend un module de lecture labiale (43a) et la séquence d'images est une séquence d'images des caractéristiques faciales du deuxième utilisateur, dans lequel le module de lecture labiale est configuré pour analyser la séquence d'images des caractéristiques faciales du deuxième utilisateur pour générer le texte et
dans lequel le module de lecture labiale (43a) est configuré pour détecter une combinaison d'une orientation de mouvement d'une caractéristique faciale, d'une vitesse de mouvement d'une caractéristique faciale, et de changements de flux optique sur des images consécutives de la séquence d'images pour analyser la séquence d'images pour générer le texte.

2. Dispositif électronique (10) selon la revendication 1, dans lequel le dispositif électronique est un téléphone mobile.

3. Dispositif électronique (10a) pour un premier utilisateur comprenant :
une circuiterie de communication (46) pour établir une communication vidéo avec un autre dispositif électronique (10) d'un deuxième utilisateur ;
un dispositif de génération d'image d'utilisateur (20) pour générer une séquence d'images du premier utilisateur communiquant comme partie de la communication vidéo ; et
un module de conversion (43) pour analyser la séquence d'images du premier utilisateur sur la base d'un changement de mouvement dans l'orientation et la vitesse de caractéristiques d'image pour générer un texte correspondant à une portion de communication du premier utilisateur ;
dans lequel, comme partie de la communication vidéo, la circuiterie de communication est configurée pour transmettre le texte correspondant au texte de la portion de communication sensiblement en temps réel et simultanément à la séquence d'images au dispositif électronique du deuxième utilisateur pour l'affichage sur l'autre dispositif électronique ;
dans lequel le module de conversion (43) comprend un module de lecture labiale (43a) et la séquence d'images est une séquence de mouvement des caractéristiques faciales du premier utilisateur, dans lequel le module de lecture labiale est configuré pour analyser le mouvement des caractéristiques faciales du premier utilisateur pour générer le texte ; et
dans lequel le module de lecture labiale (43a) est configuré pour détecter une combinaison d'une orientation de mouvement d'une caractéristique faciale, d'une vitesse de mouvement d'une caractéristique faciale, et de changements de flux optique sur des images consécutives de la séquence d'images pour analyser la séquence d'images pour générer le texte.

4. Dispositif électronique (10a) selon la revendication 3, dans lequel le dispositif de génération d'image d'utilisateur (20) comprend un ensemble de caméra ayant un objectif (21) qui fait face au premier utilisateur durant la communication.

5. Dispositif électronique (10a) selon l'une quelconque des revendications 3 et 4, dans lequel le dispositif électronique est un téléphone mobile.

6. Procédé de visiophonie comprenant les étapes suivantes :
l'établissement d'une communication vidéo ;
la réception d'une séquence d'images d'un participant communiquant dans la communication vidéo ; et
l'analyse de la séquence d'images sur la base d'un changement de mouvement dans l'orientation et la vitesse de caractéristiques d'image pour générer un texte correspondant à une portion de communication du participant ;
dans lequel le procédé comprend en outre :
l'affichage du texte sur un dispositif d'affichage (14) sur un dispositif électronique (10) sensiblement en temps réel et simultanément à la séquence d'images correspondant au texte de la portion de communication ; et
dans lequel la séquence d'images est une séquence d'images des caractéristiques faciales du participant, et l'étape d'analyse comprend l'utilisation d'un module de lecture labiale pour analyser la séquence d'images des caractéristiques faciales du participant pour générer le texte ; et
dans lequel l'étape d'analyse comprend en outre la détection d'une combinaison d'une orientation de mouvement d'une caractéristique faciale, d'une vitesse de mouvement d'une caractéristique faciale, et de changements de flux optique sur des images consécutives de la séquence d'images pour analyser la séquence d'images pour générer le texte.

7. Procédé selon la revendication 6, dans lequel l'étape d'analyse comprend en outre la lecture labiale pour analyser la séquence d'images pour générer le texte.

8. Procédé selon l'une quelconque des revendications 6 et 7, comprenant en outre :
la génération de la séquence d'images dans un premier dispositif électronique (10a) ;
la transmission de la séquence d'images à un deuxième dispositif électronique (10) comme partie de la communication vidéo ;
l'analyse de la séquence d'images sur la base d'un changement de mouvement dans l'orientation et la vitesse de caractéristiques d'image dans le deuxième dispositif électronique pour générer un texte correspondant à la portion de communication du participant ; et
l'affichage du texte sur un dispositif d'affichage (14) sur le deuxième dispositif électronique sensiblement en temps réel et simultanément à la séquence d'images correspondant au texte de la portion de communication.

9. Procédé selon l'une quelconque des revendications 6 et 7, comprenant en outre :
la génération de la séquence d'image dans un premier dispositif électronique (10a) ;
l'analyse de la séquence d'images sur la base d'un changement de mouvement dans l'orientation et la vitesse de caractéristiques d'image dans le premier dispositif électronique pour générer un texte correspondant à la portion de communication du participant ;
la transmission du texte à un deuxième dispositif électronique (10) comme partie de la communication vidéo ; et
l'affichage du texte sur un dispositif d'affichage (14) sur le deuxième dispositif électronique sensiblement en temps réel et simultanément à la séquence d'images correspondant au texte de la portion de communication.
